# EUROPÄISCHE PATENTSCHRIFT

(11) **EP 1 862 709 B1**
(45) Veröffentlichungstag und Bekanntmachung des Hinweises auf die Patenterteilung: **02.09.2009**
(21) Anmeldenummer: 07016068.4
(22) Anmeldetag: 21.08.2002
(51) Int. Cl.: F16J 15/08, F02F 11/00

(54) **Zylinderkopfdichtung**
Cylinder head seal
Joint de tête de cylindre

(30) Priorität: 05.09.2001 DE 10143431
(43) Veröffentlichungstag der Anmeldung: 05.12.2007
(62) Teilanmeldung aus: 02018677.1
(73) Patentinhaber: ElringKlinger AG, 72581 Dettingen (DE)
(72) Erfinder: Diez, Armin, 73252 Lenningen (DE); Schmucker, Frank, 89584 Ehingen (DE); Werz, Ulrich, 72581 Dettingen (DE)
(74) Vertreter: Sparing Röhl Henseler Patentanwälte European Patent Attorneys

(56) Entgegenhaltungen:
- EP-A- 0 306 766
- DE-A1- 19 605 871
- DE-A1- 19 749 053
- DE-A1- 19 928 602
- US-A- 4 739 999
- US-A- 5 568 932
- US-A- 5 713 580
- US-B1- 6 250 644

## Beschreibung

Die Erfindung betrifft eine metallische Zylinderkopfdichtung nach dem Oberbegriff des Anspruchs 1.

Eine derartige Zylinderkopfdichtung ist aus der DE-A-196 05 871 bekannt. Ferner ist aus EP 0 306 766 B1 oder EP 0 230 804 B1 eine metallische Zylinderkopfdichtung für eine Brennkraftmaschine bekannt, bei der ein Trägerblech zusammen mit mindestens einem gesickten, elastischen Deckblech, letzteres als Funktionsblech, vorgesehen sind. Da sich der Dichtspalt zwischen Zylinderkopf und Zylinderblock einer Brennkraftmaschine im Betrieb in Abhängigkeit vom Arbeitstakt des jeweils betrachteten Zylinders ändert, ist die Dichtung ständigen Pressungsänderungen unterworfen und muß zur Aufrechterhaltung einer einwandfreien Abdichtung dauerhafte Federungseigenschaften aufweisen. Hierzu wird die um die jeweilige Brennkammeröffnung herum verlaufende, als Federelement wirkende Sicke durch einen entlang des Brennkammerrandes angeordneten Federwegbegrenzer oder Stopper geschützt, der den Federweg der Sicke, die den auftretenden, vertikal zur Dichtungsebene erfolgenden Relativbewegungen des Zylinderkopfes gegenüber dem Zylinderblock folgt, begrenzt, so daß sich die Sicke nur in dem für sie vorgesehenen Federwegbereich bewegt, nicht platt gedrückt werden kann und auch nicht zu stark auffedert. Denn auch die Entlastung der Sicke darf nicht vollständig sein, sondern nur soweit erfolgen, daß eine Mindestverformung beim höchsten auftretenden Brennraumdruck die erforderliche Abdichtung sicherstellt. Der Federwegbegrenzer bildet eine sich entlang des Brennkammerrandes erstreckende Überhöhung der Zylinderkopfdichtung.

Allerdings ergeben sich im Kantenbereich des Federwegbegrenzers aufgrund der Durchbiegung der Motorenbauteile Zylinderblock und -kopf sehr hohe Kantenpressungen und demzufolge örtlich in diesem Bereich eine hohe statische Werkstoffbeanspruchung an Zylinderblock, -kopf und -dichtung bzw. entsprechende Verformungen. Bei Zündung wird der Kantenbereich des Federwegbegrenzers entlastet. Dies führt zu hohen Spannungsamplituden in diesem Bereich. Vor allem bei Hochleistungsmotoren ist es möglich, daß bei Zündung der Kontakt im Bereich des Federwegbegrenzers verloren geht. Dementsprechend kommt es zusätzlich zu der statischen Beanspruchung im Kantenbereich des Federwegbegrenzers zu einer dynamischen Beanspruchung, da sehr hohe Spannungsamplituden wirken. Die Rißgefahr an den Motorbauteilen wird dadurch deutlich erhöht. Entsprechendes trifft für eine Kante zu, die an einem Trägerblech in folge Kröpfung ausgebildet ist, um den Federwegbegrenzer und den entsprechenden Trägerblechabschnitt zwischen den gesickten Dechblechen zu vermitteln, wie in EP 0 306 766 B1 beschrieben.

Abgesehen davon können dann, wenn der Kontakt im Bereich des Federwegbegrenzers verloren geht, heiße Brenngase ungehindert bis zur eigentlichen Abdichtstelle, die durch die Sicke aus Federstahl gebildet wird, gelangen. Hierdurch kann aufgrund der hohen Temperatur die Federeigenschaft der Sicke und damit ihre Dichtwirkung herabgesetzt werden.

Bei Buchsenmotoren, und zwar insbesondere bei solchen, die eingepreßte Buchsen haben, kommt hinzu, daß unter ungünstigen Bedingungen, etwa fertigungsbedingt oder aufgrund ungünstiger Betriebsbedingungen des Motors, ein Spalt zwischen Buchse und Zylinderblock entsteht. Damit kann bei Zündung heißes Brenngas ungehindert in den Spalt zwischen Zylinderblock und Buchse gelangen.

Aufgabe der Erfindung ist es, eine Zylinderkopfdichtung nach dem Oberbegriff des Anspruchs 1 zu schaffen, bei der die Kantenpressung im Bereich des Verformungsbegrenzers wesentlich reduziert wird.

Diese Aufgabe wird entsprechend dem kennzeichnenden Teil des Anspruchs 1 gelöst.

Dadurch, daß radial einwärts von der jeweiligen, die eigentliche Abdichtstelle bildenden, ringförmigen Sicke in dem axialen Bereich, in dem der zugehörige, statisch wirkende Federwegbegrenzer angeordnet ist, beabstandet bezüglich dessen Kanten ein zusätzliches, zweckmäßigerweise schmales und im wesentlichen linienförmig wirkendes, nicht platt drückbares Abstützelement vorgesehen ist, kann die Kraftübertragung in Richtung zur Mitte des Federwegbegrenzers verlagert werden, so daß die Kantenpressung und damit die statische Beanspruchung der Motorbauteile stark verringert wird.

Wie erkannt wurde, wird insbesondere das dem Zylinderkopf zugewandte, gesickte Deckblech infolge entsprechender Reibung beim Zünden etwas in radialer Richtung (bezogen auf die Brennkammeröffnung) verschoben. Hierdurch wird das Deckblech gegenüber der radial äußeren Kante des Federwegbegrenzers bzw. einer Kröpfung des Trägerblechs verschoben, wodurch dieser Bereich einer Kraftbeaufschlagung praktisch zwischen maximaler Kraft und null unterworfen und damit besonders stark beansprucht wird. Das Abstützelement bewirkt aber, daß beim Betrieb der Brennkraftmaschine keine wesentlichen Verschiebungen in radialer Richtung (bezogen auf die Brennkammeröffnung) zwischen gesicktem Deckblech und dem Verformungsbegrenzer bzw. der zwischen den Deckblechen befindlichen Zwischenlage auftritt, da die Preßkraft auf eine größere Auflagefläche verteilt wird, so daß die partielle Pressung kleiner wird. Hierdurch wird die Rißgefahr des Deckblechs erheblich vermindert bzw. eliminiert.

Die Situation zu hoher Kantenpressung und damit die Gefahr des Reißens der Deckbleche kann auch bei Buchsenmotoren, bei denen der Verformungsbegrenzer radial über die jeweilige Buchse hinausragt, im Bereich der Außenränder der Buchsen auftreten, da der Zylinderblock etwa aus einer Aluminiumlegierung infolge seiner Erwärmung im Betrieb die Buchsen etwas in Richtung Zylinderblock drückt, so daß diese etwas überstehen und eine dementsprechende Kante bilden, an der die Kantenpressung besonders hoch ist. Das Abstützelement, das sich dann im Bereich zwischen dieser Kante und dem Brennkammerrand befinden muß, schafft hier ebenso Abhilfe.

Das Abstützelement verhindert auch eine zu hohe Dynamik der Sicke, indem von dieser ein Teil der Krafteinwirkung weggenommen wird.

Insbesondere bei großen Höhen des Verformungsbegrenzers von beispielsweise > 0,12 mm ist das Vorsehen des Abstützelements zweckmäßig.

Außerdem kann das Abstützelement federnd ausgebildet sein. Hierdurch kann im Bereich des Verformungsbegrenzers durch die so gebildete zusätzliche Abdichtstelle gegenüber heißem Brenngas unter Verbrennungsdruck nach außen und damit zu der die eigentliche Abdichtstelle bildenden Sicke hin abgedichtet werden. Damit wird der Dichtspalt am Brennkammerrand unter der Motorbetriebbedingung permanent geschlossen gehalten. Auf diese Weise kann bei Buchsenmotoren vermieden werden, daß heißes Brenngas in einen Spalt zwischen Buchse und Zylinderblock eindringt.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.

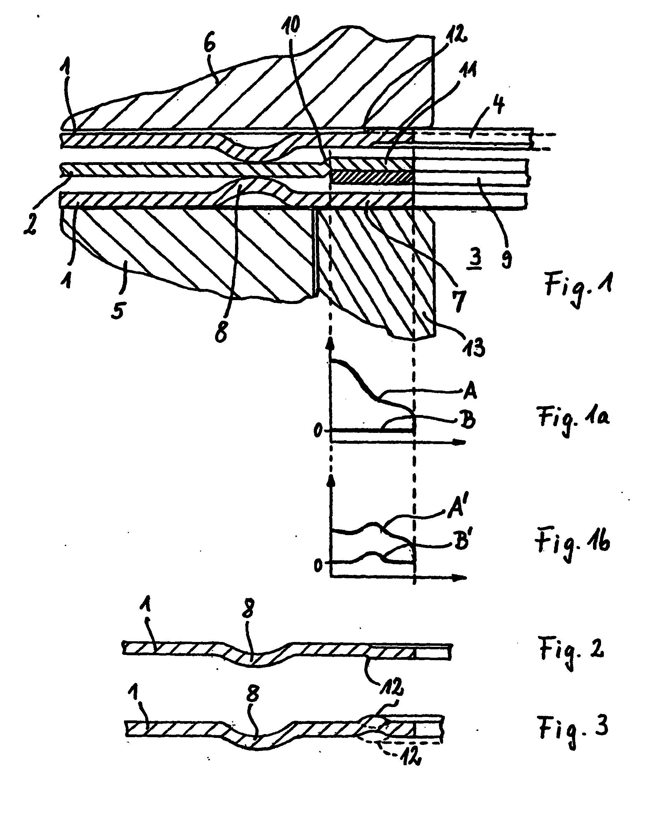

Fig. 1 zeigt ausschnittweise und im Schnitt eine Ausführungsform einer Zylinderkopfdichtung im nicht eingespannten Zustand.

Fig. 1 a und 1b zeigen zugehörige Diagramme betreffend den Pressungsverlauf im Bereich des Verformungsbegrenzers.

Fig. 2 bis 8 zeigen ausschnittweise und im Schnitt weitere Ausführungsformen, wobei die Fig. 4 bis 8 stark schematisiert sind.

Die in Fig. 1 dargestellte Zylinderkopfdichtung umfaßt zwei im wesentlichen plane Deckbleche 1 aus elastischem Metall, insbesondere Federstahl, zwischen denen ein im wesentlichen planes Trägerblech 2 aus Stahlblech angeordnet ist. Die Deckbleche 1 und das Trägerblech 2 sind mit mehreren Brennkammeröffnungen 3 entsprechend den Brennkammern 4 einer zugehörigen Brennkraftmaschine versehen, die einen Zylinderblock 5 und einen damit unter Zwischenschaltung der Zylinderkopfdichtung verschraubten Zylinderkopf 6 aufweist. Um jede Brennkammeröffnung 3 herum ist mit Abstand zu dieser unter Belassung eines randseitigen Blechabschnitts 7 im Öffnungsrandbereich eine Sicke 8 vorgesehen ist, wobei die Sicken 8 mit ihren Scheiteln einander zugekehrt sind. Der Federweg der Sicken 8 ist durch wenigstens einen sich konzentrisch zur jeweiligen Sicke 8 im axialen Bereich des randseitigen Blechabschnitts 7 angeordneten statischen Verformungsbegrenzer 9 begrenzt. In Fig. 1 ist das Trägerblech 2 im Bereich der randseitigen Blechabschnitte 7 zweckmäßigerweise mit einer Abkröpfung 10 versehen, so daß ein gegenüber dem Trägerblech 2 versetzter, am Brennkammerrand umlaufender Ringabschnitt 11 gebildet wird, in den der ringförmige Verformungsbegrenzer 9 eingesetzt ist, so daß dieser zusammen mit dem Ringabschnitt 11 einen verdickten Abschnitt bildet, der sich im wesentlichen mittig zwischen den Deckblechen 1 befindet.

Das dem Zylinderkopf 6 zugewandte Deckblech 1 besitzt im Bereich des Verformungsbegrenzers 9 ein zusätzliches, nicht platt drückbares Abstützelement 12. Das Abstützelement 12 kann statisch, etwa ein wulstförmiger Auftrag beispielsweise in Form einer Schweißraupe od.dgl. oder auch elastisch, d.h. als zusätzliches Federelement in Form einer leichten, auswärts gerichteten Kröpfung (wie in Fig. 1 dargestellt) oder Halbsicke ausgebildet sein.

Wenn der Zylinderkopf 6 mit dem Zylinderblock 5 verspannt wird, werden die Sicken 8 soweit abgeflacht, bis die Deckbleche 1 auf dem durch den Verformungsbegrenzer 9 und den Ringabschnitt 11 gebildeten, verdickten Abschnitt zur Anlage kommen.

Ohne das zusätzliche Abstützelement 12 (gestrichelt in Fig. 1 dargestellt) ergäbe sich dann eine Pressungsverteilung im Bereich des Verformungsbegrenzers 9, wie sie in Fig. 1 a dargestellt ist. Hierbei ist aufgrund der Verformung des Zylinderkopfes 6 und des Zylinderblocks 5, die beim Einspannen der Zylinderkopfdichtung infolge des Verformungsbegrenzers 9 zu einem sich zur Brennkammer 4 hin geringfügig konisch öffnenden Dichtspalt zwischen Zylinderkopf 6 und -block 5 führt, die Pressung am Brennkammerrand am geringsten und steigt dann bis zur Kante der Abkröpfung 10 bzw. des Verformungsbegrenzers 9 an, wenn kein Zünddruck wirkt (Kurve A). Es ergibt sich somit an der radial äußeren Kante des Verformungsbegrenzers 9 bzw. der radial inneren Kante der Abkröpfung 10 eine sehr hohe Kantenpressung. Bei Zündung, d.h. wenn der Zünddruck einwirkt, kommt es zur Entlastung (Kurve B), die bis auf null gehen kann. Dies führt zu hohen Spannungsamplituden in diesem Bereich. Vor allem bei Hochleistungsmotoren ist es möglich, daß bei Zündung der Kontakt in diesem Bereich verloren geht, so daß dann zusätzlich zu der hohen statischen Beanspruchung noch eine sehr hohe dynamische Beanspruchung hinzu kommt, die die Rißgefahr an den Bauteilen deutlich erhöht.

Mit dem zusätzlichen Abstützelement 12 ergibt sich eine geringere Kantenpressung und dafür ein Maximum der Pressungsverteilung und damit der Kraftübertragung im Bereich des Abstützelements 12, und zwar vorzugsweise im mittleren Bereich des Verformungsbegrenzers 9, vgl. Fig. 1 b, Kurven A' und B', und zwar sowohl mit als auch ohne Zünddruck. Die Spannungsamplitude an der äußeren Kante des Verformungsbegrenzers 9, die zwischen null und dortiger maximaler Kantenpressung variiert, ist daher durch das zusätzliche Abstützelement 12 verringert. Zwar führt der Zünddruck auch hier allgemein zur Entlastung, jedoch ble ibt eine kleine Restkraft des federnden Abstützelements 12, die ausreicht, den Dichtspalt trotz der Entlastung durch den Zünddruck abzudichten. Die statische wie auch die dynamische Werkstoffbeanspruchung werden hierdurch deutlich reduziert.

Infolge der zusätzlichen Abdichtung wird auch vermieden, daß heiße Brenngase ungehindert bis zur eigentlichen, durch die Sicken 8 gebildeten Abdichtstelle gelangen und die Federkraft der Sicken 8 aufgrund der hohen Temperatur herabsetzen könnten.

Bei Buchsenmotoren, bei denen die Brennkammern 4 von in den Zylinderblock 5 eingesetzten Buchsen 13 gebildet werden, wird durch die zusätzliche Abdichtung auch vermieden, daß heiße Brenngase in einen fertigungsbedingten oder aufgrund ungünstiger Betriebsbedingungen entstehenden Spalt zwischen Zylinderblock 5 und Buchse 13 gelangen können. Bei Buchsenüberstand, d.h. wenn die Buchse 13 aus dem Zylinderblock 5 etwas herausragt, und bei sich über die Buchse 13 hinaus radial auswärts erstreckendem Verformungsbegrenzer 9 wird das Abstützelement 12 im vorzugsweise im wesentlichen mittleren Bereich der Buchse 13 angeordnet.

Die seitens des zusätzlichen, federnden Abstützelements 12 aufzubringende Kraft liegt unter der Motorbetriebbedingung (maximaler Zünddruck) im allgemeinen im Bereich von etwa 30 bis 60 N/mm.

Wie aus Fig. 2 ersichtlich, kann die das zusätzliche Abstützelement 12 bildende Abkröpfung auch zur Trägerplatte 2 gerichtet sein.

Wie aus Fig. 3 ersichtlich, kann das zusätzliche Abstützelement 12 auch in Form einer kleinen Vollsicke ausgebildet und gegebenenfalls auch der Trägerplatte 2 zugewandt sein (letzteres gestrichelt in Fig. 3).

Anstatt an dem dem Zylinderkopf 6 zugewandten Deckblech 1 ausgebildet, kann das Abstützelement 12 auch an dem dem Zylinderblock 5 zugewandten Deckblech 1 ausgebildet sein. Statt dessen kann das Abstützelement 12 auch an beiden Deckblechen 1 vorgesehen sein.

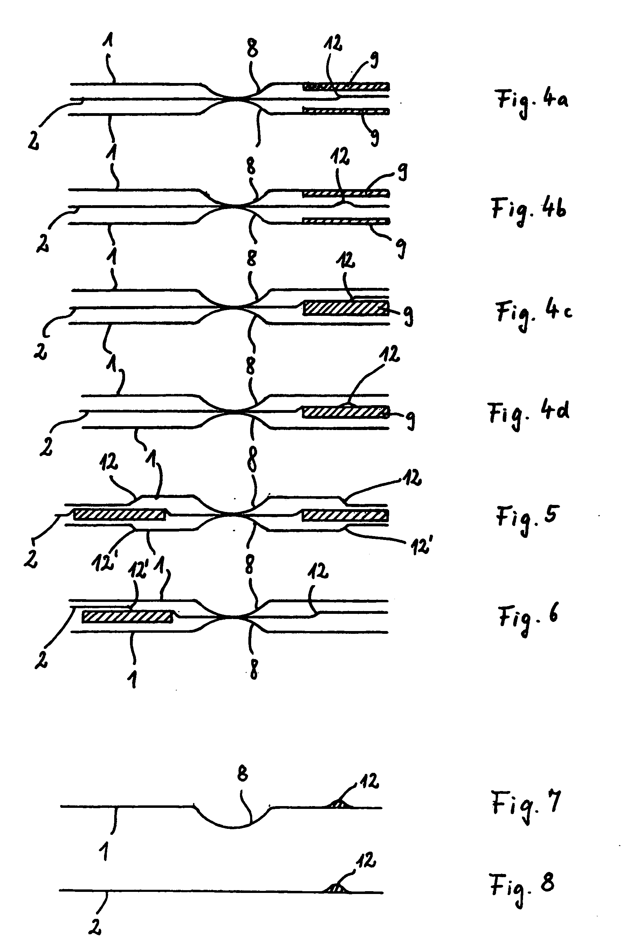

Wie aus Fig. 4a bis 4d ersichtlich, kann das Abstützelement 12 in Form einer kleinen Halb- oder Vollsicke auch im - aus elastischem Stahlblech gefertigten - Trägerblech 2 im Bereich des einen Verformungsbegrenzers 9 oder von zwei, an den Deckblechen 1 befindlichen Verformungsbegrenzern 9 vorgesehen sein.

Wenn eine Verformungsbegrenzung der Sicken 8 auf der der Brennkammeröffnung 4 abgewandten Seite der Sicken 8 durch einen mittleren, am Trägerblech 2 befindlichen oder zwei an den Deckblechen 1 angeordnete Verformungsbegrenzer 9 alleine oder zusätzlich zu der brennkammerseitigen Verformungsbegrenzung der Sicken 8 entsprechend der jeweiligen Brennkraftmaschine vorgesehen ist, kann auf der den Sicken 8 abgewandten Seite ein entsprechendes als kleine Abkröpfung oder Vollsicke ausgebildetes Abstützelement 12' vorgesehen sein, vgl. Fig. 5, 6.

Bei Ausbildung des Abstützelements 12 im Trägerblech 2 als Abkröpfung oder als kleine Vollsicke wird dieses, wenn das Trägerblech 2 aus dem hierfür üblicherweise verwendeten Stahl besteht, beim Einspannen teilweise plastisch verformt, jedoch ist die Abkröpfung bzw. Vollsicke nicht gänzlich wegdrückbar. Allerdings ist die Höhe der Abkröpfung bzw. der Form der Vollsicke so zu wählen, daß eine genügende Höhe verbleibt, um eine optimale Abstützung zu erzielen.

Wie aus Fig. 7 und 8 ersichtlich ist, kann das Abstützelement 12 auch als unelastischer, wulstförmiger Auftrag, etwa als Schweißraupe, auf dem Deckblech 1 bzw. dem Trägerblech 2 vorgesehen sein.

Das zusätzliche Abstützelement 12, 12' übt im eingespannten Zustand der Zylinderkopfdichtung eine schmale, etwa im mittleren Bereich des jeweiligen Verformungsbegrenzers 9 wirksame, im wesentlichen linienförmige Pressung aus.

Der Verformungsbegrenzer 9 kann im übrigen entsprechend der in bestimmten Bereichen aufgrund verminderter Bauteilsteifigkeit von Zylinderblock 5 und Zylinderkopf 6 im eingespannten Zustand der Zylinderkopfdichtung zu erwartenden Preßdruckerniedrigungen höhen- und/oder breitenprofiliert sein.

## Patentansprüche

1. Metallische Zylinderkopfdichtung für eine einen benachbarte Brennkammern (4) aufweisenden Zylinderblock (5) und einen damit verschraubten Zylinderkopf (6) aufweisende Brennkraftmaschine, mit wenigstens einem oberen und einem unteren Deckblech (1) aus elastischem Metall und einem Trägerblech (2), die übereinander angeordnet und mit mehreren Brennkammeröffnungen (3) entsprechend den Brennkammern (4) der Brennkraftmaschine versehen sind, wobei um jede Brennkammeröffnung (3) herum mit Abstand zu dieser unter Belassung eines randseitigen Blechabschnitts (7) im Offnungsrandbereich, eine Sicke (8) vorgesehen ist, deren Federweg durch wenigstens einen konzentrisch zur Sicke (8) im axialen Bereich des randseitigen Blechabschnitts (7) und/oder im axialen Bereich radial außenseitig zur Sicke (8) angeordneten Verformungsbegrenzer begrenzt ist, im axialen Bereich des wenigstens einen Verformungsbegrenzers (9) beabstandet bezüglich dessen Kanten ein separat vom Verformungsbegrenzer ausgebildetes Abstützelement (12) vorgesehen ist, das die Kantenpressung am radial äußeren Rand des Verformungsbegrenzers (9) begrenzt, **dadurch gekennzeichnet, daß** der Verformungsbegrenzer (9) in eine Abkröpfung (10) des Trägerblechs (2) eingesetzt ist zur Ausbildung eines verdickten Abschnitts, der sich im wesentlichen mittig zwischen den Deckblechen (1) befindet, und das Abstützelement (12) in dem Trägerblech (1) im Bereich des Verformungsbegrenzers (9) vorgesehen ist.

2. Zylinderkopfdichtung nach Anspruch 1, **dadurch gekennzeichnet, daß** das Abstützelement (12) im eingespannten Zustand der Zylinderkopfdichtung eine schmale, etwa im mittleren Bereich des Verformungsbegrenzers (9) wirksame im wesentlichen linienförmige Pressung ausübt.

3. Zylinderkopfdichtung nach Anspruch 1 oder 2, **dadurch gekennzeichnet, daß** das Abstützelement (12) eine Voll- oder Halbsicke ist.

4. Zylinderkopfdichtung nach Anspruch 3, **dadurch gekennzeichnet, daß** das Abstützelement (12) elastisch ist.

5. Zylinderkopfdichtung nach Anspruch 4, **dadurch gekennzeichnet, daß** das Abstützelement (12) eine ausreichende Federkraft zum Geschlossenhalten des Dichtspalts zwischen Zylinderblock (5) und Zylinderkopf (6) unter Zünddruckeinwirkung aufweist.

6. Zylinderkopfdichtung nach einem der Ansprüche 1 bis 5, **dadurch gekennzeichnet, daß** bei einem Buchsenmotor, bei dem sich der Verformungsbegrenzer (9) bis über die Buchse (13) hinaus radial nach außen erstreckt, das Abstützelement (12) im Bereich zwischen den Buchsenrändern angeordnet ist.

7. Zylinderkopfdichtung nach einem der Ansprüche 1 bis 6, **dadurch gekennzeichnet, daß** der Verformungsbegrenzer (9) entsprechend der in bestimmten Bereichen aufgrund verminderter Bauteilsteifigkeit von Zylinderblock (5) und Zylinderkopf (6) im eingespannten Zustand der Zylinderkopfdichtung zu erwartenden Pressdruckerniedrigungen höhen- und breitenprofiliert ist.

## Claims

1. Metallic cylinder-head gasket for an internal combustion engine which has a cylinder block (5) having adjacent combustion chambers (4) and has a cylinder head (6) screwed to said cylinder block, with at least one upper and one lower cover plate (1) made of elastic metal and a carrier plate (2), which are arranged one above the other and are provided with a plurality of combustion-chamber orifices (3) corresponding to the combustion chambers (4) of the internal combustion engine, a bead (8) being provided around each combustion-chamber orifice (3) at a distance from the latter, so as to leave a sheet-metal edge portion (7) in the orifice-edge region, the spring travel of said bead being limited by at least one deformation limiter arranged concentrically to the bead (8) in the axial region of the sheet-metal edge portion (7) and/or in the axial region radially on the outside in relation to the bead (8), a support element (12) formed separately from the deformation limiter (9) being provided in the axial region of the at least one deformation limiter and at a distance from the edges of the latter and limiting the edge pressure at the radially outer edge of the deformation limiter (9), **characterized in that** the deformation limiter (9) is inserted into a bend (10) of the carrier plate (2) to form a thickened portion which is located essentially centrally between the cover plates (1), and the support element (12) is provided in the cover plate (1) in the region of the deformation limiter (9).

2. Cylinder-head gasket according to Claim 1,
**characterized in that,** when the cylinder-head gasket is in the tensioned state, the support element (12) exerts a narrow essentially linear pressure taking effect, approximately in the middle region of the deformation limiter (9).

3. Cylinder-head gasket according to Claim 1 or 2, **characterized in that** the support element (12) is a full bead or half-bead.

4. Cylinder-head gasket according to Claim 3,
**characterized in that** the support element (12) is elastic.

5. Cylinder-head gasket according to Claim 4,
**characterized in that** the support element (12) has sufficient spring force for keeping the sealing gap between the cylinder block (5) and cylinder head (6) closed under the action of the ignition pressure.

6. Cylinder-head gasket according to one of Claims 1 to 5, **characterized in that,** in a bush-type engine in which the deformation limiter (9) extends radially outwards beyond the bush (13), the support element (12) is arranged in the region between the bush edges.

7. Cylinder-head gasket according to one of Claims 1 to 6, **characterized in that** the deformation limiter (9) is profiled in terms of height and/or of width according to the pressure reductions to be expected in specific regions on account of diminished component rigidity of the cylinder block (5) and cylinder head (6) in the tensioned state of the cylinder-head gasket.

## Revendications

1. Joint de culasse métallique destiné à un moteur à combustion interne présentant un bloc-cylindres (5) présentant des chambres de combustion (4) adjacentes et une culasse (6) vissée à ce dernier, comportant au moins une tôle de couverture supérieure et inférieure (1) constituée d'un métal élastique et une tôle de support (2) qui sont disposées les unes au-dessus des autres et sont munies de plusieurs ouvertures de chambre de combustion (3) correspondant aux chambres de combustion (4) du moteur à combustion interne, moyennant quoi est prévue autour de chaque ouverture de chambre de combustion (3) à distance de cette dernière en laissant une section de tôle (7) périphérique dans la zone du bord de l'ouverture une moulure (8) dont le débattement est limité par au moins un limiteur de déformation disposé concentriquement à la moulure (8) dans la zone axiale de la section de tôle (7) côté bord et/ou dans la zone axiale radialement côté extérieur par rapport à la moulure (8), dans la zone axiale du au moins un limiteur de déformation (8) à distance par rapport à ses arêtes est prévu un élément d'appui (12) réalisé pour être séparé du limiteur de déformation et qui limite la pression sur les arêtes au niveau du bord extérieur radial du limiteur de déformation (9), **caractérisé en ce que** le limiteur de déformation (9) est placé dans un coude (10) de la tôle de support (2) pour la formation d'une section épaissie qui se trouve sensiblement centrée entre les deux tôles de couverture (1) et **en ce que** l'élément d'appui (12) est prévu dans la tôle de support (2) dans la zone du limiteur de déformation (9).

2. Joint de culasse selon la revendication 1, **caractérisé en ce que** l'élément d'appui (12) exerce à l'état serré du joint de culasse une compression délimitée sensiblement de forme linéaire active à peu près dans la zone centrale du limiteur de déformation (9).

3. Joint de culasse selon la revendication 1 ou 2, **caractérisé en ce que** l'élément d'appui (12) est une moulure complète ou une demi-moulure.

4. Joint de culasse selon la revendication 3, **caractérisé en ce que** l'élément d'appui (12) est élastique.

5. Joint de culasse selon la revendication 4, **caractérisé en ce que** l'élément d'appui (12) présente une force élastique suffisante pour maintenir fermé le jeu d'étanchéité entre le bloc-cylindres (5) et la culasse (6) sous l'effet de la pression d'allumage.

6. Joint de culasse selon l'une des revendications 1 à 5, **caractérisé en ce que** dans le cas d'un moteur à chemises, dans lequel le limiteur de déformation (9) s'étend radialement vers l'extérieur jusqu'au-dessus de la chemise (13), l'élément d'appui (12) est placé dans la zone située entre les bords des chemises.

7. Joint de culasse selon l'une des revendications 1 à 6, **caractérisé en ce que** le limiteur de déformation (9) est profilé en hauteur et en largeur en fonction des baisses de pression de compression attendues dans certaines zones en raison d'une moindre rigidité des éléments du bloc-cylindres (5) et de la culasse (6) à l'état serré.
